# EUROPEAN PATENT SPECIFICATION

(11) **EP 2 260 267 B1**
(45) Date of publication and mention of the grant of the patent: **07.09.2011**
(21) Application number: 09727135.7
(22) Date of filing: 09.02.2009
(51) Int. Cl.: G01C 21/34, G01C 21/36

(54) **NAVIGATION DEVICE AND NAVIGATION METHOD**
NAVIGATIONSGERÄT UND NAVIGATIONSVERFAHREN
DISPOSITIF DE NAVIGATION ET PROCÉDÉ DE NAVIGATION

(30) Priority: 31.03.2008 JP 2008090897
(43) Date of publication of application: 15.12.2010
(73) Proprietor: Aisin AW Co., Ltd., Anjo-shi Aichi-ken, 444-1192 (JP)
(72) Inventor: NAGASE, Kenji, Anjo-shi, Aichi-ken 444-1192, (JP)
(74) Representative: Kramer - Barske - Schmidtchen
(86) International application number: PCT/JP2009/000498
(87) International publication number: WO 2009/122643

(56) References cited:
- EP-A1- 1 548 404
- EP-A2- 1 092 949
- EP-A2- 1 615 190
- JP-A- 2007 232 573
- US-A1- 2007 106 461

## Description

### Technical Field

The present invention relates to a navigation device, a navigation method and a navigation program.

### Background Art

At a timing when a vehicle has reached a predetermined distance to an intersection where right/left turn guidance is required on a guidance route, known art (Japanese Patent Application Publication No. JP-A-S64-16916) for a conventional navigation device performs guidance pertaining to travel at the intersection. Regarding lane change guidance, other known art (Japanese Patent Application Publication No. JP-A-2000-18956) performs the lane change guidance at a timing earlier than the timing for ordinary guidance when a destination lane of the lane change is congested.
Patent Citation 1: Japanese Patent Application Publication No. JP-A-S64-16916
Patent Citation 1: Japanese Patent Application Publication No. JP-A-2000-18956

EP 1 548 404 A1 discloses a navigation apparatus, navigation system and navigation method providing guidance for lane changes. The navigation system includes an input device for inputting a destination, a current location detector for detecting current location of the vehicle, a camera for imaging an area to the rear of the vehicle, a route search program for searching a route to the destination and a controller for providing guidance along the route determined by the route search. The controller controls the imaging by camera according to the route guidance information and determines whether lane change is required in accordance with information obtained from the image. When it is determined that a lane change is required, the traffic situation in the vicinity surrounding the vehicle is recognized and guidance for the lane change is provided.

EP 615 190 A2 discloses systems, methods and programs of producing and using traffic signal information wherein, when a vehicle is closely approaching a traffic signal, an image of traffic signal lamps disposed on the traffic signal is taken. By producing image data of the traffic signal lamps based on the taken image and analyzing the image data, traffic signal state information is produced. The traffic signal state information includes a state of the traffic signal as of the time of taking the image of the traffic signal lamps. The traffic signal information including the produced traffic signal state information, traffic signal location information and time information is stored in a memory.

US 2007/106461 A1 discloses a method and a system which provide an interface for processing a data base containing information pertaining to traffic conditions. Using the interface, a driver can receive traffic conditions potentially affecting the driver's particular commute, just prior to the time at which the driver chooses between one or more routes for the commute. The driver can easily receive timely traffic information from the interface via the driver's wireless communication device, such as a wireless telephone.

### Disclosure of Invention

### Technical Problem

Such related art as described above do not consider cases where preparation pertaining to travel at a guidance-target point is difficult due to a lighting timing of a signal. An example is preparation for travel in line with guidance at a guidance-target point that must be conducted before reaching the guidance-target point. If there is a signal at which the vehicle is extremely likely to stop prior to the guidance-target point, then it is necessary to both take action with respect to the signal (by decelerating and stopping in accordance with the flow of surrounding vehicles) and prepare for travel in line with the guidance, which imposes a burden on the driver.

The present invention was devised in light of the foregoing problem, and it is an object of the present invention to provide art that considers a lighting timing of a signal and enables a driver to perform preparation for traveling at a guidance-target point in good time.

### Technical Solution

In order to achieve the above object, in the present invention, information specifying a guidance-target point ahead of a host vehicle is obtained; signal group information specifying a signal group whose lighting timing is controlled in an interrelated manner is obtained; and the signal group information is referenced so that guidance pertaining to travel at the guidance-target point is performed at an earlier timing when there is a leading signal of a signal group within a predetermined distance from the guidance-target point on the host vehicle side than when there is no leading signal. According to this structure, guidance when there is a leading signal within a predetermined distance is achieved at a timing earlier than when there is no leading signal. Therefore, based on such guidance, the driver can prepare for traveling through the guidance-target point from an earlier timing than usual. For example, if a lane change is required, then it is possible to watch for an opportunity to perform the lane change from an earlier timing than usual. Thus, according to the invention, the driver can perform a lane change in good time.

A guidance-target point information obtaining unit obtains information specifying a guidance-target point ahead of the host vehicle. Therefore, the guidance-target point information obtaining unit is not limited, provided that the guidance-target point information obtaining unit is capable of obtaining a current position of the host vehicle and obtaining information specifying a guidance-target point ahead in the traveling direction of the host vehicle. The current position of the host vehicle can be obtained based on diverse information obtained by various types of sensors, cameras, communications, and the like. For example, a structure may be adopted that identifies a position of the vehicle using a sensor or a camera, and another structure that may be employed obtains the position of the vehicle using a signal from a GPS, a host vehicle path on a map, vehicle-to-vehicle communication, road-to-vehicle communication, or the like. The guidance-target point in the present specification means a point for which a lane change must be made prior to reaching the point, or a point at which a lane change may be required. For example, the guidance-target point may be assumed as an intersection ahead in the vehicle traveling direction, a point at which a restriction regarding the traveling direction of a lane changes, a point where the number of lanes decreases, a start point of a regulated zone due to road construction, or an entry point into a facility at the side of the road. The guidance-target point ahead of the host vehicle can be obtained by referring to map information, based on the identified current position of the host vehicle, and the guidance route or traveling direction of the host vehicle.

A signal group information obtaining unit is not limited, provided that the signal group information obtaining unit is capable of obtaining signal group information specifying a signal group whose lighting timing is controlled in an interrelated manner. Furthermore, any form of signal group information may be used. However, the signal group information must enable identification of at least a signal (leading signal) farthest upstream in the traveling direction of the road controlled by the signal from among signals forming a signal group. Moreover, the signal group information may also be capable of identifying which signal group every signal belongs to or what number a signal is among the signal group when counted from the upstream side of the traveling direction. Control of the lighting timing in an interrelated manner means that, a plurality of consecutive signals is controlled such that a lit color thereof changes in an interrelated manner. For example, assuming that the vehicle is traveling at a predetermined speed, the signals are controlled so as to be a color permitting passage when the vehicle arrives at the respective signals. This specification assumes in the following description that since the lighting timing between two consecutive signal groups is not coordinated, the possibility of the vehicle stopping due to the leading signals of each signal group is higher than the possibility of the vehicle stopping due to coordinated signals.

A guidance unit is not limited, provided that the guidance unit refers to the signal group information, and is capable of performing guidance pertaining to travel at the guidance-target point at an earlier timing when the leading signal of the signal group is present within a predetermined distance from the guidance-target point on the host vehicle side than when there is no leading signal. Performing guidance at an early timing means lengthening a time or distance until passage through a guidance-target point after the driver is made aware of the need for a lane change (or after providing the driver with material for judging the need for a lane change). Various structures may be adopted as the form of guidance, provided that such structures are capable of prompting recognition of the guidance-target point by the driver. For example, voice or visual guidance may be used, or guidance through vibration. Note that the phrase "leading signal present within a predetermined distance from the guidance-target point on the host vehicle side" also includes a case where the signal of the intersection acting as the guidance-target point corresponds to a leading signal.

According to the present invention, the guidance unit may perform guidance at an earlier timing as the number of leading signals present within the predetermined distance increases. A larger number of leading signals present within a predetermined distance from the guidance-target point on the host vehicle side also leads to an increase in the number of stops by the vehicle within the predetermined distance. Therefore, circumstances not conducive to performing preparation for traveling through the guidance-target point, i.e., performing a lane change, are likely to occur. For a while after stopping at a signal intersection and starting travel again, there is often little space between following and preceding vehicles traveling in the host vehicle lane, as well as between those traveling in lanes adjacent to and going in the same direction as the host vehicle lane. Performing a lane change is also difficult because there is often hardly any difference in the speeds of the vehicles traveling in the respective lanes. As a consequence, a larger number of stops at signals can result in circumstances even less conducive to lane changing. Hence, according to the above structure, guidance is executed at an earlier timing as the number of leading signals increases, which enables the driver to perform a lane change in good time.

Furthermore, according to the present invention, the guidance unit performs guidance at a timing when the host vehicle passes a point separated by the predetermined distance on the host vehicle side from a leading signal that is nearest the host vehicle among the leading signals present within the predetermined distance from the guidance-target point on the host vehicle side. If there is even one leading signal within the predetermined distance from the guidance-target point on the host vehicle side, then it is assumed that there is insufficient time or distance for performing a lane change before reaching the guidance-target point after passing the leading signal. Therefore, guidance may be performed at a timing when the host vehicle passes a point even farther upstream by a predetermined distance from the leading signal farthest upstream, with the aim of enabling the driver to finish changing lanes to the greatest extent possible before arriving at the leading signal farthest upstream among the plurality of leading signals within a predetermined distance from the guidance-target point on the upstream side in the direction of travel. Accordingly, the driver can perform a lane change in good time.

Note that the procedure as described in the present invention of obtaining information specifying a guidance-target point ahead of a host vehicle; obtaining signal group information specifying a signal group whose lighting timing is controlled in an interrelated manner; and referring to the signal group information so that guidance pertaining to travel at the guidance-target point is performed at an earlier timing when there is a leading signal of a signal group within a predetermined distance from the guidance-target point on the host vehicle side than when there is no leading signal, is also applicable as a program or a method that performs such processing. The above-described navigation device, program, and method include various forms, and may be realized as an individual device, or realized through parts used in common with respective components provided in the vehicle. Furthermore, modifications can be made as appropriate such as using software for a portion or using hardware for a portion. The invention is also achieved as a recording medium of a program that controls the navigation device. The recording medium of such software may naturally be a magnetic recording medium or a magneto-optic recording medium, and the same holds for any recording medium developed in the future.

### Brief Description of the Drawings

[fig.1]FIG. 1 is a block diagram of a navigation device;
[fig.2]FIG. 2 is a schematic diagram for explaining a guidance-execution point;
[fig.3]FIG. 3 is a flowchart showing travel guidance processing;
[fig.4]FIG. 4 is a drawing showing an example of a correspondence relation between a number of leading signals and an additional distance;
[fig.5]FIG. 5 is a schematic diagram for explaining a guidance-execution point;
[fig.6]FIGs. 6A, 6B and 6C show schematic diagrams of examples for displaying a lane list;
[fig.7]FIG. 7A and 7B show schematic diagrams of examples for displaying a lane list.

### Best Mode for Carrying Out the Invention

Hereinafter, embodiments of the present invention will be described in the following order.
(1) Navigation Device Structure
(2) Travel Guidance Processing
(3) Other Embodiments

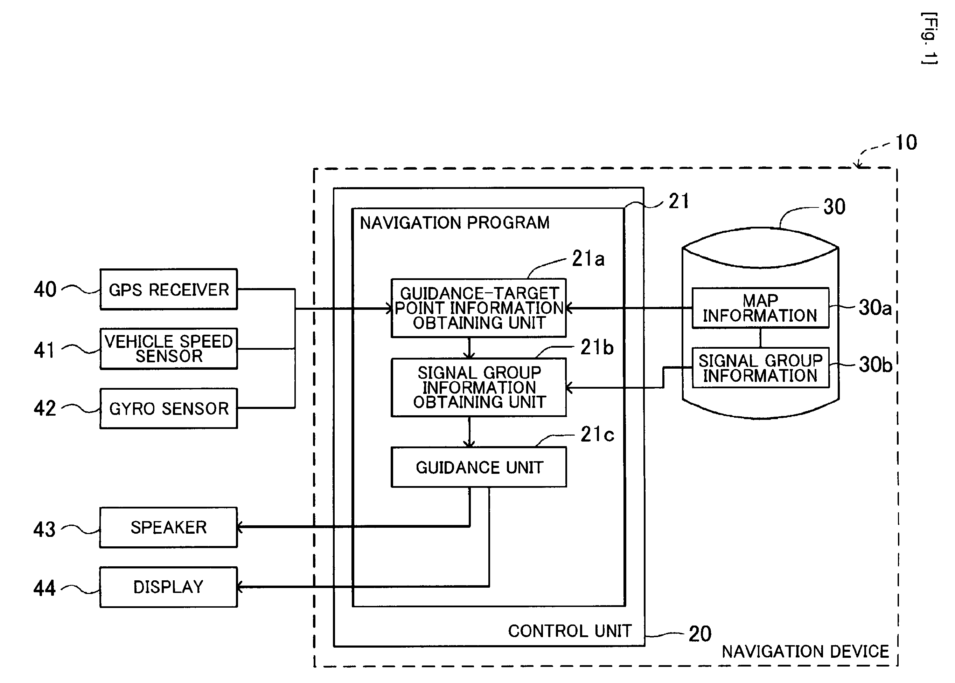

(1) Navigation Device Structure
FIG. 1 is a block diagram showing the structure of a navigation device 10 according to the present invention. The navigation device 10 includes a control unit 20 that has a CPU, a RAM, a ROM, and the like, and a memory medium 30. The navigation device 10 is capable of executing a program stored in the memory medium 30 and the ROM using the control unit 20. In the present embodiment, one such executable program is a navigation program 21, wherein the navigation program 21 has a function for performing advance guidance pertaining to travel at a guidance-target point.

In order to realize the above function performed by the navigation program 21, the host vehicle (a vehicle installed with the navigation device 10) is provided with a GPS receiver 40, a vehicle speed sensor 41, a gyro sensor 42, a speaker 43, and a display 44. The function performed by the navigation program 21 is realized by these units and the control unit 20 working in cooperation.

The GPS receiver 40 receives radio waves from a GPS satellite and outputs a signal for calculating a current position of the host vehicle via an interface (not shown). The control unit 20 receives the signal to obtain the current position of the host vehicle. The vehicle speed sensor 41 outputs a signal that corresponds to a rotational speed of a wheel provided in the host vehicle. The control unit 20 obtains this signal via an interface (not shown) to obtain the speed of the host vehicle. The gyro sensor 42 detects an angular acceleration when the host vehicle turns within a horizontal plane and outputs a signal that corresponds to the orientation of the host vehicle. The control unit 20 obtains this signal via an interface (not shown) to obtain the travel direction of the host vehicle. The vehicle speed sensor 41 and the gyro sensor 42 are utilized for correcting the current position of the host vehicle as identified from the output signal of the GPS receiver 40, and the like. In addition, the control unit 20 corrects the current position of the host vehicle as appropriate based on verification with map information 30a described later.

By executing the navigation program 21, the control unit 20 performs a route search for the vehicle based on output information from the GPS receiver 40 and map information described later, and also performs route guidance via the display 44 or the speaker 43. In order to perform guidance pertaining to travel at a guidance-target point on the guidance route, the navigation program 21 includes a guidance-target point information obtaining unit 21a, a signal group information obtaining unit 21b, and a guidance unit 21c. The term "guidance-target point" means a point for which a lane change must be made prior to reaching the point, or a point at which a lane change may be required. In the present embodiment, the guidance-target point is described as an intersection where a right turn or a left turn is recommended based on the guidance route.

In addition, the memory medium 30 stores the map information 30a and signal group information 30b for carrying out the above-described function performed by the navigation program 21. The map information 30a includes node data indicating nodes set on roads traveled by vehicles, shape interpolating data for identifying the shape of a road between nodes, link data indicating connections between nodes, and data indicating landmark objects existing on or around a road. The map information 30a is used for identifying the current position of the host vehicle, performing a route search to a destination, performing route guidance to the destination, and the like. A node corresponds to an intersection or the like, and the node data includes position coordinates and an identifier for the node. The guidance-target point information obtaining unit 21a is a module that realizes in the control unit 20 the functions of obtaining the current position of the host vehicle and obtaining information that specifies a guidance-target point ahead in the traveling direction of the host vehicle. The guidance-target point information obtaining unit 21a refers to the map information 30a, and obtains the identifier and position coordinates of a node corresponding to the guidance-target point based on information specifying the current position of the host vehicle and the guidance route.

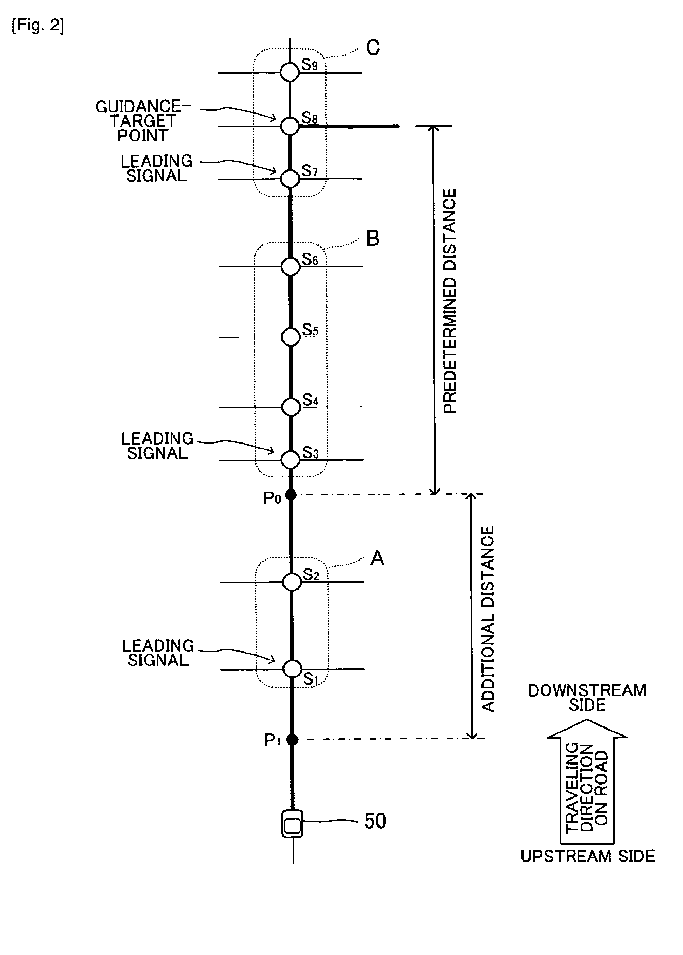

The signal group information obtaining unit 21b is a module that realizes in the control unit 20 a function for obtaining the signal group information 30b that specifies a signal group whose lighting timing is controlled in an interrelated manner. In the present embodiment, the signal group information 30b is stored in advance in the memory medium 30. Control of the lighting timing in an interrelated manner means that, a plurality of consecutive signals is controlled such that a lit color thereof changes in an interrelated manner. For example, assuming that the vehicle is traveling at a predetermined speed, the signals are controlled so as to be a color permitting passage when the vehicle arrives at the respective signals. Any form of signal group information may be used to specify a signal group whose lighting timing is controlled in an interrelated manner. In the present embodiment, a signal is stored associated with the identifier of a node, and each signal is further stored associated with an identifier of the signal group to which the signal belongs. In addition, information is also stored that indicates what number a signal is among a plurality of signals forming a signal group when counted from an upstream side of a traveling direction on a road. A signal farthest upstream among the plurality of signals forming a signal group will be hereafter referred to as a leading signal. FIG. 2 shows a signal group A formed by signals S₁, S₂, a signal group B formed by signals S₃, S₄, S₅, S₆, and a signal group C formed by signals S₇, S₈, S₉. Signals S₁, S₃, S₇ act as leading signals for the respective signal groups. This specification assumes that since the lighting timing between two consecutive signal groups is not controlled in an interrelated manner, there is a high possibility of the vehicle stopping due to the leading signals of each signal group.

The guidance unit 21c is a module that realizes in the control unit 20 a function that refers to the signal group information 30b and performs guidance pertaining to travel at a guidance-target point via the speaker 43 and the display 44 at an earlier timing when there is a leading signal within a predetermined distance from the guidance-target point on the host vehicle side than when there is no leading signal. Performing guidance at an early timing more specifically means lengthening a time or distance until passage through a guidance-target point after the driver is made aware of the need for a lane change (or after providing the driver with material for judging the need for a lane change).
The above description involved the structure of the navigation device 10.

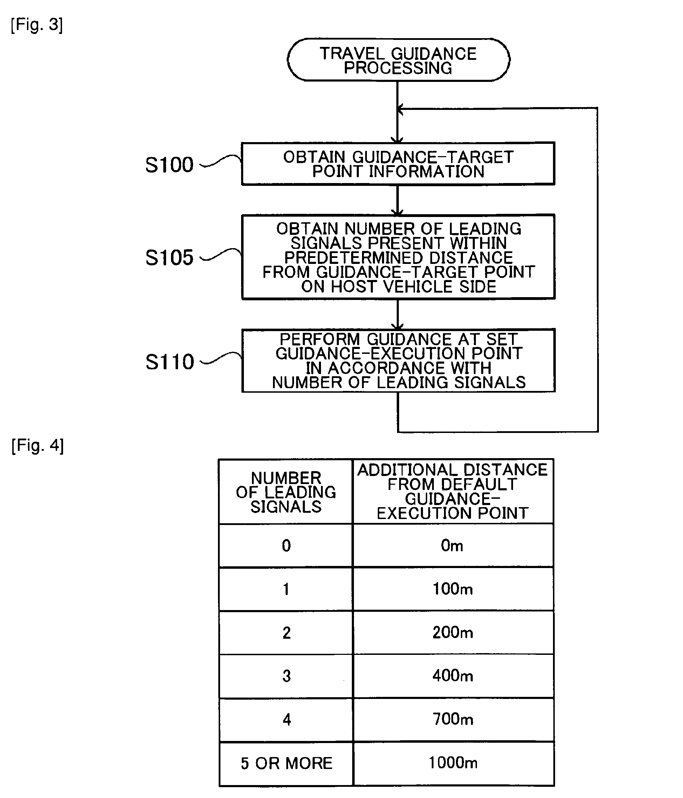

(2) Travel Guidance Processing
Travel guidance processing executed by the navigation device 10 having the above-described structure will be explained. When the navigation device 10 carries out the navigation program 21, the processing shown in FIG. 3 is performed through the functions of the modules provided in the navigation program 21. First, the control unit 20 through processing of the guidance-target point information obtaining unit 21a obtains information on a subsequent guidance-target point (step S100). Specifically, the current position of the host vehicle is obtained, and also obtained is the identifier and the position of a node corresponding to an intersection where a right turn or a left turn is recommended. Note that such an intersection is one ahead of the current position of the host vehicle on the guidance route and nearest the host vehicle. If the guidance route is a route shown by a bold line in FIG. 2, for example, then the identifier and the position of the node corresponding to the intersection of the signal S₈, which is an intersection at which a right turn is made, is obtained.

Next, the control unit 20 through processing of the signal group information obtaining unit 21b obtains the number of leading signals present within a predetermined distance from the guidance-target point on the host vehicle side (step S105). The predetermined distance is set in advance as an approximate distance over which a lane change can be performed in good time, e.g. a distance of approximately 300 meters. In FIG. 2, the two signals S₇, S₃ are present within a predetermined distance from the intersection of the signal S₈ on a host vehicle 50 side. A point of the predetermined distance on the upstream side from the guidance-target point is referred to as a default guidance-execution point P₀. In the present embodiment, lane change guidance is ordinarily performed when the host vehicle passes the default guidance-execution point, which is a predetermined distance from the guidance-target point on the upstream side.

Next, the control unit 20 through processing of the guidance unit 21c performs guidance pertaining to travel at the guidance-target point, at the guidance-execution point set in accordance with the number of leading signals (step S110). Specifically, based on the number of leading signals obtained at step S105, the distance from the guidance-target point to the guidance-execution point is set longer for a larger number of leading signals so as to enable guidance at an earlier timing. In other words, an additional distance added to the predetermined distance is longer for a larger number of leading signals, and the guidance-execution point is set as a point separated from the guidance-target point on the upstream side by the predetermined distance plus the additional distance. FIG. 4 is a drawing showing an example of a correspondence relation between the number of leading signals present within a predetermined distance from the guidance-target point and an additional distance further added to the upstream side from the default guidance-execution point P₀. In the example of FIG. 2, there are two leading signals present within a predetermined distance, and therefore the guidance-execution point is set as a point P₁ on the upstream side 200 meters from the default guidance-execution point P₀. Accordingly, guidance pertaining to travel at the guidance-target point is performed at the timing when the host vehicle 50 passes through the guidance-execution point P₁. Voice guidance such as "Turn right at the intersection 500 meters ahead" may be output via the speaker 43, for example.

In this manner, guidance when there is a leading signal within a predetermined distance is achieved at a timing earlier than when there is no leading signal. Therefore, based on such guidance, as preparation for traveling through the guidance-target point the driver can judge from an earlier timing than usual whether a lane change must be made. If a lane change is required, then it is possible to watch for an opportunity to perform the lane change from an earlier timing than usual. Accordingly, the driver can perform a lane change in good time.

In the present embodiment, a larger number of leading signals present within a predetermined distance results in guidance performed at an earlier timing. A larger number of leading signals present within a predetermined distance from the guidance-target point on the host vehicle side also leads to an increase in the number of stops by the vehicle within the predetermined distance. Therefore, circumstances not conducive to performing preparation for traveling through the guidance-target point are likely to occur. For example, for a while after stopping at a signal intersection and starting travel again, there is often little space between following and preceding vehicles traveling in the host vehicle lane, as well as between those traveling in lanes adjacent to and going in the same direction as the host vehicle lane. Performing a lane change is also difficult because there is often hardly any difference in the speeds of the vehicles traveling in the respective lanes. As a consequence, a larger number of stops can result in circumstances even less conducive to lane changing. Hence, according to the present embodiment, guidance is executed at an earlier timing as the number of leading signals increases, which enables the driver to perform a lane change in good time. Note that when the host vehicle 50 passes through the default guidance-execution point P₀, voice guidance such as "Turn right at the intersection 300 meters ahead" may be performed again.

(3) Other Embodiments
The above embodiment is only one example for carrying out the present invention. Various other embodiments may be adopted, provided that information specifying a guidance-target point ahead of the host vehicle is obtained; information specifying a signal group whose lighting timing is controlled in an interrelated manner is obtained; and the signal group information is referenced so that guidance pertaining to travel at the guidance-target point is performed at an earlier timing when there is a leading signal of the signal group within a predetermined distance from the guidance-target point on the host vehicle side than when there is no leading signal.

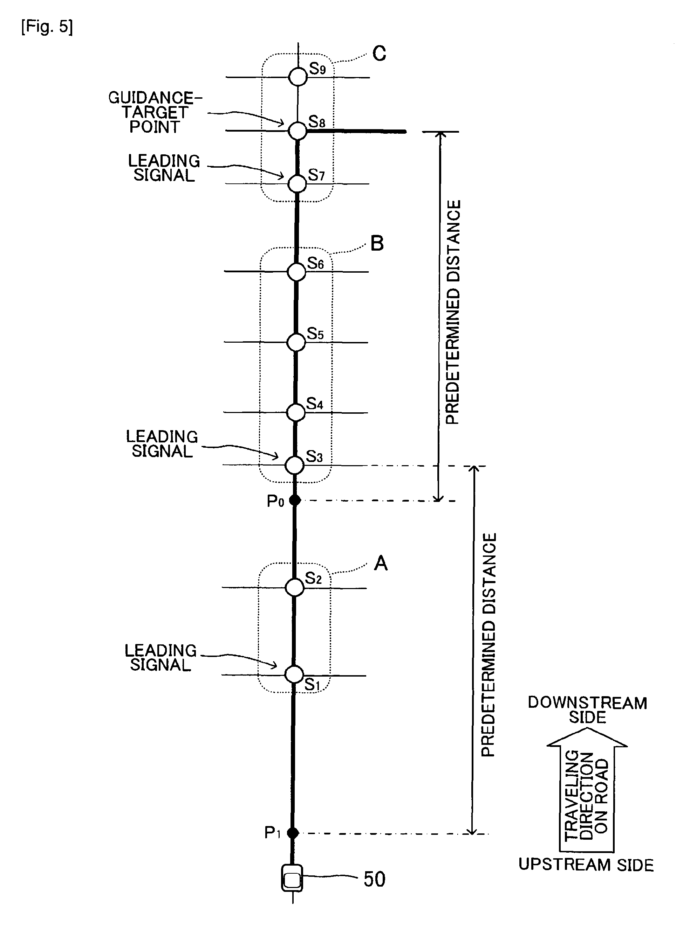

For example, in the above embodiment, the guidance-execution point is set in accordance with the number of leading signals present within a predetermined distance. However, guidance may be performed at the timing when the host vehicle passes a point separated from the leading signal nearest the host vehicle by a predetermined distance on the host vehicle side, wherein the leading signal is one among a plurality of leading signals present within a predetermined distance from the guidance-target point on the host vehicle side. As illustrated in FIG. 5, the leading signal S₃ among the leading signals present within a predetermined distance on the upstream side from the intersection of the signal S₈, which acts as the guidance-target point, is farthest upstream, and the point P₁ on the upstream side at a predetermined distance from the leading signal S₃ is set as the guidance-execution point. Accordingly, guidance with respect to performing a right turn at an intersection ahead located at a distance ranging from the point P₁ to the intersection of the signal S₈ may be executed at the timing when the host vehicle passes the guidance-execution point P₁. This is to allow the driver to finish changing lanes to the greatest extent possible before arriving at the leading signal farthest upstream among the plurality of leading signals within a predetermined distance from the guidance-target point on the upstream side in the direction of travel. Note that if there is even one leading signal within a predetermined distance from the guidance-target point on the host vehicle side, then it is assumed that there is insufficient time or distance for performing a lane change before reaching the guidance-target point after passing the leading signal. For this reason, guidance is performed at the timing when the host vehicle passes the point P₁, which is even farther upstream by a predetermined distance from the leading signal S₃ farthest upstream. As a consequence, the driver can perform a lane change in good time.

Note that the signal of the intersection that acts as the guidance-target point corresponding to a leading signal is included among cases where the leading signal is present within a predetermined distance from the guidance-target point on the host vehicle side. For example, in FIG. 2, when the intersection of the leading signal S₁ is the guidance-target point, the guidance-execution point may be set as a point about 100 meters farther upstream from the default guidance-execution point, which is separated from the intersection of the leading signal S₁ by a predetermined distance on the upstream side. In the vicinity of the signal S₁ upstream from the signal S₁, vehicles traveling in the host vehicle lane start to decelerate along with vehicles traveling in lanes adjacent to the host vehicle lane, which also suggests that the space between following and preceding vehicles will begin to decrease. Therefore, in this case as well, the occurrence of circumstances not conducive to lane changing is highly likely. Accordingly, an effect identical to the above embodiment can be achieved by performing guidance at an earlier timing than usual in this case as well.

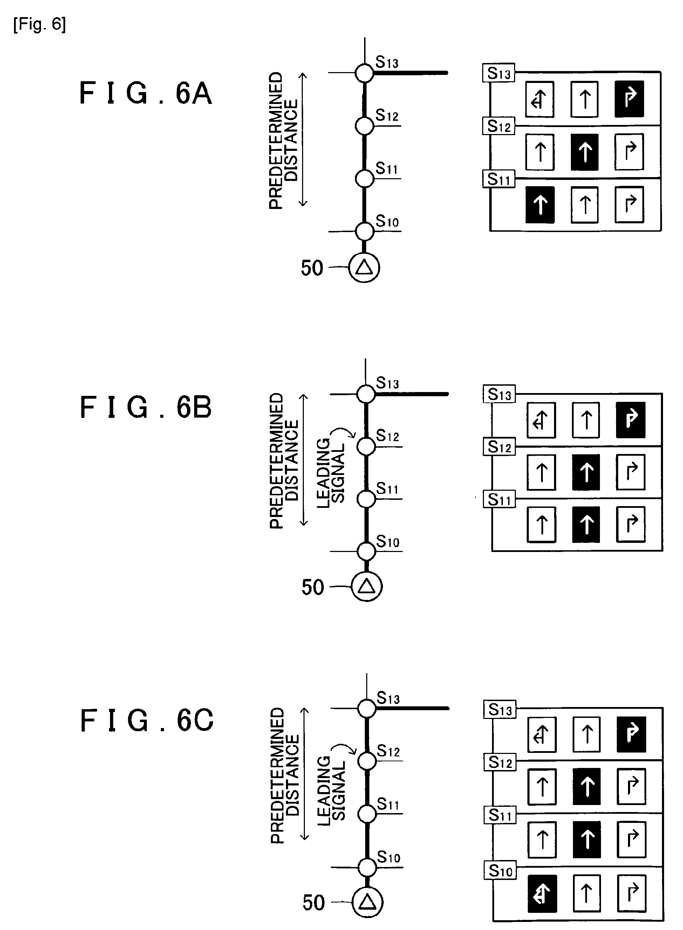

The above embodiment described an example of advancing the timing at which voice guidance is executed. However, various other structures may be adopted as the form of guidance, provided that such structures are capable of prompting recognition of the guidance-target point by the driver. For example, guidance may be performed through vibration. Alternatively, the form of guidance pertaining to travel at the guidance-target point as shown on the display 44 of the navigation device 10 may be varied as follows. FIGS. 6A to 6C show a guidance route (a bold line in each figure), and a lane list that specifies recommended travel lanes when traveling on the guidance route. FIGS. 6A to 6C show a route where a right turn is required at the intersection of signal S₁₃. In other words, the intersection of the signal S₁₃ corresponds to the guidance-target point in this case. Ordinarily, as shown in FIG. 6A, a lane list is displayed with a maximum of three links among the links ahead of the host vehicle on the host vehicle 50 side from the intersection of the signal S₁₃- If there is a leading signal (S₁₂) within a predetermined distance from the guidance-target point on the host vehicle 50 side, then a lane list as displayed in FIG. 6B or FIG. 6C may be used. In FIG. 6A, the left lane between signals S₁₀ and S₁₁ is designated as the recommended travel lane, the center lane is designated between signals S₁₁ and S₁₂, and the right lane is designated as the recommended travel lane between signals S₁₂ and S₁₃. In FIG. 6B, the center lane is designated as the recommended travel lane from between the signals S₁₀ and S₁₁. In other words, FIG. 6B shows guidance performed so as to enable a lane change to the right side at an earlier timing compared to FIG. 6A. Similar to FIG. 6B, FIG. 6C shows the center lane designated as the recommended travel lane between the signals S₁₀ and 8)), and also displays the recommended travel lane of a link farther upstream than that between the signals S₁₀ and S₁₁.

In the above embodiment, the guidance-target point was described as an intersection where a right turn or a left turn is recommended based on the guidance route. However, the invention may be applied to other than intersections where a right turn or a left turn is recommended; the invention may be applied with respect to various guidance-target points regardless of whether route guidance is being performed. For example, the guidance-target point may be all intersections ahead in the vehicle traveling direction, a point at which a restriction regarding the traveling direction of a lane changes, a point where the number of lanes decreases, a start point of a regulated zone due to road construction, or an entry point into a facility at the side of the road.

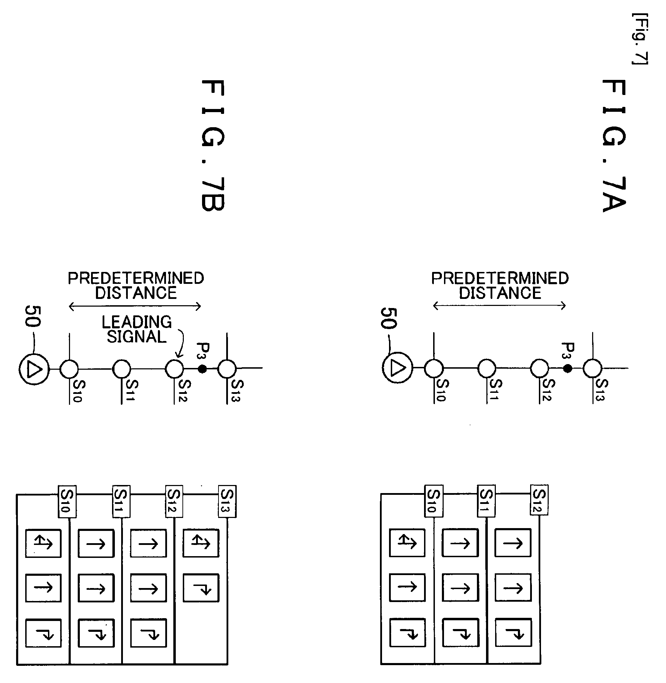

For example, in FIGS. 7A and 7B, a point P₃ indicates a point at which the number of lanes decreases from three to two, and in such case, the lane-reduction point P₃ corresponds to a guidance-target point. Regarding vehicle travel, ordinarily as shown in FIG. 7A, a lane list is constantly displayed of three links ahead, including the link in which the host vehicle 50 is currently traveling, and it is determined whether a guidance-target point such as the lane-reduction point P₃ exists in a fourth (3 + predetermined number) link ahead as counted when including the link in which the host vehicle 50 is currently traveling. If the lane-reduction point P₃ exists and there is a leading signal (S₁₂) within a predetermined distance from the guidance-target point on the host vehicle 50 side, then as shown in FIG. 7B, a lane list may be displayed of four or more links ahead, including the link in which the host vehicle 50 is currently traveling. As a consequence, the driver can recognize the existence of the lane-reduction point P₃ at an earlier timing than usual when there is a leading signal within a predetermined distance from the guidance-target point on the host vehicle side. In addition, if all intersections ahead of the host vehicle are considered guidance-target points, then a lane list of three links ahead of the host vehicle may be normally displayed, and a lane list of four links or more ahead of the host vehicle may be displayed when there is a leading signal between any of the three links ahead. Note that the number of links is not limited to three or four or more as given in the above example. Any number of links may be used, provided that compared to a normal display of a lane list, a lane list of more links is displayed when there is a leading signal between a guidance-target point and the host vehicle.

It should be noted that the form of signal group information is not limited to that described in the above embodiment. Any form may be used, provided that at least a leading signal among signals forming a signal group can be identified based on the signal group information.
In the above embodiment, the signal group is formed by a plurality of signals. However, the signal group may be formed by one signal. In such case, the signal acts as a leading signal.

## Claims

1. A navigation device, comprising:
a guidance-target point information obtaining unit (21 a) that is adapted to obtain information
specifying a guidance-target point ahead of a host vehicle (50);
a signal group information obtaining unit (21 b) that is adapted to obtain signal group information
specifying a signal group (A, B, C) whose lighting timing is controlled in an interrelated manner; and
a guidance unit (2 1 c) that is adapted to refer to the signal group information, and to perform
guidance pertaining to travel at the guidance-target point at an earlier timing when there is a leading signal of the signal group (A, B, C) within a predetermined distance from the guidance-target point on a host vehicle side than when there is no leading signal.

2. The navigation device according to claim 1, wherein
the guidance unit (21c) is adapted to perform guidance at an earlier timing as a number of leading
signals present within the predetermined distance increases.

3. The navigation device according to claim 1, wherein
the guidance unit (21c) is adapted to perform guidance at a timing when the host vehicle (50) passes a
point separated by the predetermined distance on the host vehicle side from a leading signal that is nearest the host vehicle (50) among the leading signals present within the predetermined distance from the guidance-target point on the host vehicle side.

4. A navigation method, comprising the steps of:
obtaining information specifying a guidance-target point ahead of a host vehicle (50);
obtaining signal group information specifying a signal group (A, B, C) whose lighting timing is controlled in an interrelated manner; and
referring to the signal group information, and performing guidance pertaining to travel at the guidance-target point at an earlier timing when there is a leading signal of the signal group (A, B, C) within a predetermined distance from the guidance-target
point on a host vehicle side than when there is no leading signal.

5. A navigation program, performing in a computer the functions of:
obtaining information specifying a guidance-target point ahead of a host vehicle (50);
obtaining signal group information specifying a signal group (A, B, C) whose lighting timing is controlled in an interrelated manner; and
referring to the signal group information, and performing guidance pertaining to travel at the guidance-target point at an earlier timing when there is a leading signal of the signal group (A, B, C) within a predetermined distance from the guidance-target point on a host vehicle side than when there is no leading signal.

## Patentansprüche

1. Navigationsvorrichtung, mit
einer Führungs-Zielpunktinformationsbeschaffungseinheit (21 a), die angepasst ist zum Beschaffen von Information, die einen Führungs-Zielpunkt vor einem Host-Fahrzeug (50) spezifiziert,
einer Signalgruppeninformationsbeschaffungseinheit (21b), die angepasst ist zum Beschaffen einer Signalgruppeninformation, die eine Signalgruppe (A, B, C) spezifiziert, deren Leuchtzeit auf eine in Wechselbeziehung stehende Weise gesteuert wird, und
einer Führungseinheit (21c), die dazu angepasst ist, auf die Signalgruppeninformation zu verweisen und eine Führung, die ein Reisen an dem Führungs-Zielpunkt betrifft, zu einem früheren Zeitpunkt, wenn es ein Leitsignal der Signalgruppe (A, B, C) innerhalb einer vorbestimmten Entfernung von dem Führungs-Zielpunkt auf einer Host-Fahrzeugseite gibt, als wenn es kein Leitsignal gibt, durchzuführen.

2. Navigationsvorrichtung nach Anspruch 1, bei der
die Führungseinheit (21 c) angepasst ist zum Durchführen von Führung zu einem früheren Zeitpunkt, wenn eine Anzahl von Leitsignalen, die innerhalb der vorbestimmten Entfernung vorliegen, ansteigt.

3. Navigationsvorrichtung nach Anspruch 1, bei der
die Führungseinheit (21 c) angepasst ist zum Durchführen von Führung zu einem Zeitpunkt, zu dem das Host-Fahrzeug (50) einen Punkt passiert, der durch die vorbestimmten Entfernung auf der Fahrzeugseite von einem Leitsignal getrennt ist, das unter den Leitsignalen, die innerhalb der vorbestimmten Distanz von dem Führungs-Zielpunkt auf der Fahrzeugseite vorliegen, am nächsten zu dem Host-Fahrzeug (50) ist.

4. Navigationsverfahren, das folgende Schritte aufweist
Beschaffen von Information, die einen Führungs-Zielpunkt vor einem Host-Fahrzeug (50) spezifiziert,
Beschaffen von Signalgruppeninformation, die eine Signalgruppe (A, B, C) spezifiziert, deren Leuchtzeit auf eine in Wechselbeziehung stehende Weise gesteuert wird, und
Verweisen auf die Signalgruppeninformation und Durchführen von Führung, die ein Reisen an dem Führungs-Zielpunkt betrifft, zu einem früheren Zeitpunkt, wenn es ein Leitsignal der Signalgruppe (A, B, C) innerhalb einer vorbestimmten Entfernung von dem Führungs-Zielpunkt auf einer Host-Fahrzeugseite gibt, als wenn es kein Leitsignal gibt.

5. Navigationsprogramm, das in einem Computer die folgenden Funktionen durchführt Beschaffen von Information, die einen Führungs-Zielpunkt vor einem Host-Fahrzeug (50) spezifiziert,
Beschaffen von Signalgruppeninformation, die eine Signalgruppe (A, B, C) spezifiziert, deren Leuchtzeit auf eine in Wechselbeziehung stehende Weise gesteuert wird, und
Verweisen auf die Signalgruppeninformation und Durchführen von Führung, die ein Reisen an dem Führungs-Zielpunkt betrifft, zu einem früheren Zeitpunkt, wenn es ein Leitsignal der Signalgruppe (A, B, C) innerhalb einer vorbestimmten Entfernung von dem Führungs-Zielpunkt auf einer Host-Fahrzeugseite gibt, als wenn es kein Leitsignal gibt.

## Revendications

1. Dispositif de navigation, comprenant :
une unité (21a) d'obtention d'informations sur un
point cible de guidage, qui est à même d'obtenir des informations spécifiant un point cible de guidage en avant d'un véhicule hôte (50) ;
une unité (21b) d'obtention d'informations sur un
groupe de signaux, qui est à même d'obtenir des informations sur un groupe de signaux spécifiant un groupe de signaux (A, B, C) dont la synchronisation d'éclairage est commandée de manière corrélée ; et
une unité de guidage (21c) qui est à même de se
référer aux informations sur le groupe de signaux et d'effectuer un guidage se rapportant à un déplacement au point cible de guidage en synchronisation plus rapprochée lorsqu'il y a un signal d'attaque du groupe de signaux (A, B, C) à une distance prédéterminée du point cible de guidage d'un côté du véhicule hôte que lorsqu'il n'y a pas de signal d'attaque.

2. Dispositif de navigation selon la revendication 1,
dans lequel :
l'unité de guidage (21c) est à même d'effectuer un
guidage en synchronisation plus rapprochée à mesure qu'un nombre de signaux d'attaque présents à la distance prédéterminée augmente.

3. Dispositif de navigation selon la revendication 1,
dans lequel :
l'unité de guidage (21c) est à même d'effectuer un
guidage en synchronisation lorsque le véhicule hôte (50) passe par un point séparé de la distance prédéterminée du côté du véhicule hôte à partir d'un signal d'attaque qui est le plus proche du véhicule hôte (50) parmi les signaux d'attaque présents à la distance prédéterminée du point cible de guidage du côté du véhicule hôte.

4. Procédé de navigation, comprenant les étapes
consistant à :
obtenir des informations spécifiant un point cible de guidage en avant d'un véhicule hôte (50) ;
obtenir des informations sur un groupe de signaux,
spécifiant un groupe de signaux (A, B, C) dont la synchronisation d'éclairage est commandée de manière corrélée ; et
se référer aux informations sur le groupe de signaux
et effectuer un guidage se rapportant à un déplacement au point cible de guidage en synchronisation plus rapprochée lorsqu'il y a un signal d'attaque du groupe de signaux (A, B, C) à une distance prédéterminée du point cible de guidage d'un côté du véhicule hôte que lorsqu'il n'y a pas de signal d'attaque.

5. Programme de navigation effectuant dans un
ordinateur les fonctions consistant à :
obtenir des informations spécifiant un point cible de
guidage en avant d'un véhicule hôte (50) ;
obtenir des informations sur un groupe de signaux,
spécifiant un groupe de signaux (A, B, C) dont la synchronisation d'éclairage est commandée de manière corrélée ; et
se référer aux informations sur le groupe de signaux
et effectuer un guidage se rapportant à un déplacement au point cible de guidage en synchronisation plus rapprochée lorsqu'il y a un signal d'attaque du groupe de signaux (A, B, C) à une distance prédéterminée du point cible de guidage d'un côté du véhicule hôte que lorsqu'il n'y a pas de signal d'attaque.
